# EUROPÄISCHE PATENTSCHRIFT

(11) **EP 1 666 301 B1**
(45) Veröffentlichungstag und Bekanntmachung des Hinweises auf die Patenterteilung: **01.10.2008**
(21) Anmeldenummer: 05024558.8
(22) Anmeldetag: 10.11.2005
(51) Int. Cl.: B60L 3/10, B66F 9/24, B60K 28/16

(54) **Flurförderzeug mit Vorrichtung zur Regelung von Schlupf**
Industrial truck with a skid control system
Chariot industriel avec dispositif de contrôle anti-patinage

(30) Priorität: 12.11.2004 DE 102004054700
(43) Veröffentlichungstag der Anmeldung: 07.06.2006
(73) Patentinhaber: STILL GMBH, 22113 Hamburg (DE)
(72) Erfinder: Fromme, Georg, 22145 Hamburg (DE); Haverkamp, Vico, 22179 Hamburg (DE); Wede, Marc, 22941 Bargteheide (DE)
(74) Vertreter: Geirhos, Johann

(56) Entgegenhaltungen:
- EP-A- 1 038 823
- EP-A- 1 093 986
- DE-A1- 10 102 523
- PATENT ABSTRACTS OF JAPAN Bd. 2002, Nr. 05, 3. Mai 2002 (2002-05-03) -& JP 2002 019598 A (TOYOTA INDUSTRIES CORP), 23. Januar 2002 (2002-01-23)

## Beschreibung

Die Erfindung betrifft ein Flurförderzeug mit mindestens einem Mittel zur Erfassung der Radumdrehungsgeschwindigkeit eines angetriebenen und/oder gebremsten Rades und mindestens einer Vorrichtung zur Regelung von Schlupf, insbesondere bei Beschleunigungs- und/oder Bremsvorgängen, an mindestens einem Rad des Flurförderzeugs.

Flurförderzeuge verfügen häufig über Mittel zur Erfassung der Radumdrehungsgeschwindigkeit eines angetriebenen und/oder gebremsten Rades. Da in elektrischen Antriebsmotoren, wie sie für Fahrantriebe von Flurförderzeugen verwendet werden, häufig ein Drehzahlsensor integriert ist, kann dieser beispielsweise neben der Überwachung des Motors auch zur Bestimmung der Fahrgeschwindigkeit verwendet werden. Der Sensor kann aber auch an anderer Stelle des Antriebsstrangs angebracht sein. Für die Regelung des Motors und die Anzeige der Fahrgeschwindigkeit wird lediglich die Drehzahl erfasst. Bei nicht angetriebenen Rädem ist ein zumeist direkt am Rad angebrachter Sensor nötig, um die Radumdrehung zu erfassen.

Große Beanspruchungen für das Flurförderzeug bestehen insbesondere dann, wenn einzelne Komponenten höher beansprucht werden, als zur Erfüllung der eigentlichen Aufgabe notwendig, beispielsweise indem beim Bremsen des Flurförderzeugs die Bremswirkung zu groß ist und das Antriebsrad blockiert. Das Rad unterliegt örtlich erhöhtem Verschleiß und wird unrund. Zudem besteht eine erhebliche Sicherheitsgefahr, da das blockierte Rad keine Seitenführungskräfte mehr übertragen kann und damit insbesondere bei gelenkten Antriebsrädem das Flurförderzeug unkontrollierbar werden kann. Auch bei Anfahr- und Beschleunigungsvorgängen kann, wenn am Antriebsrad ein zu großes Moment aufgebracht wird, dieses durchdrehen, was ebenfalls zu erhöhtem Verschleiß und reduzierter Sicherheit führt. Die Radumdrehungsgeschwindigkeit beziehungsweise die daraus berechnete Fahrgeschwindigkeit ist als Maß für besondere Beanspruchungen des Flurförderzeugs oder einzelner Komponenten davon jedoch nicht geeignet.

Um derartige Beanspruchungen zu erkennen, ist es bekannt, den Schlupf eines Antriebsrades beispielsweise beim Bremsen oder Beschleunigen zu ermitteln, indem an mindestens zwei Rädern die Drehzahlen erfasst und verglichen werden. Ein derartiger Aufbau ist jedoch relativ aufwändig, da an mindestens zwei Rädern Sensoren zur Erfassung der Drehzahl vorgesehen sein müssen. Während bei Antriebsrädern der Drehzahlsensor eines Antriebsmotors diese Funktion übernehmen kann, ist bei nicht angetriebenen Rädern die Anbringung eines Drehzahlsensors mit großem Aufwand verbunden, insbesondere bei Flurförderzeugen, bei denen die nicht angetriebenen Räder lediglich als relativ einfache Lastrollen mit einfachen Lagern ausgeführt sind. Werden die Drehzahlen von zwei angetriebenen Rädern verglichen, besteht zudem die Möglichkeit, dass erhöhter Schlupf nicht oder nur unzureichend erkannt wird, wenn beide Räder gleichzeitig die Haftung verlieren.

Aus der JP 2002-019598 A ist ein gattungsgemäßes Flurförderzeug mit einer Schlupfregelung des Antriebsrades beim Bremsen bekannt. Hierzu ist am Antriebsrad ein Drehzahlsensor angeordnet. Zur Ermittlung des Schlupfes des Antriebsrades sind zusätzlich an den Lastrollen des Flurförderzeugs Drehzahlsensoren angeordnet.

Der Erfindung liegt daher die Aufgabe zugrunde, ein Flurförderzeug mit mindestens einem Mittel zur Erfassung der Radumdrehungsgeschwindigkeit eines angetriebenen und/oder gebremsten Rades und mindestens einer Vorrichtung zur Regelung von Schlupf, insbesondere bei Beschleunigungs- und/oder Bremsvorgängen, an mindestens einem Rad des Flurförderzeugs zu schaffen, bei dem eine zuverlässige Erfassung außergewöhnlicher Beanspruchungen, insbesondere des Schlupfs an mindestens einem Rad, mit einfachen Mitteln ermöglicht wird.

Diese Aufgabe wird erfindungsgemäß dadurch gelöst, dass von Radumdrehungsgeschwindigkeiten unabhängig wirkende Mittel zur Erfassung einer Beschleunigung des Flurförderzeugs in mindestens einer Richtung vorgesehen sind, die mit der Vorrichtung zur Regelung von Schlupf in Wirkverbindung stehen. Durch Vergleich der mit von Radumdrehungsgeschwindigkeiten unabhängig wirkenden Mitteln ermittelten Beschleunigungen des Fahrzeugs mit den aus der Drehzahlmessung ermittelten Werten in der Vorrichtung zur Regelung von Schlupf kann festgestellt werden, ob der Schlupf am mittels Drehzahlsensor überwachten Rad erlaubte Werte übersteigt. In gleichartiger Weise kann durch Aufintegration der Beschleunigungsmesswerte auch die Geschwindigkeit des Flurförderzeugs bestimmt und mit der aus der Drehzahlmessung ermittelten Geschwindigkeit verglichen werden. Die Vorrichtung zur Regelung von Schlupf kann aktiviert werden und durch geeignete Maßnahmen wie beispielsweise die Reduzierung eines Antriebsmoments oder der Wirkung einer Bremsvorrichtung dem Schlupf entgegenwirken.

Vorteilhafterweise sind von Radumdrehungsgeschwindigkeiten unabhängig wirkende Mittel zum Erfassen von Beschleunigurigen in mindestens zwei Richtungen, vorzugsweise in Richtung der Fahrzeuglängsachse und der Fahrzeugquerachse, vorgesehen. Die Erfassung von Beschleunigungen in zwei Richtungen erlaubt es, die Beschleunigungskomponente in jeder gewünschten Raumrichtung innerhalb der von den Messrichtungen aufgespannten Ebene zu berechnen. Dadurch ist es möglich, die für den Vergleich mit den aus der Drehzahlmessung ermittelten Werten benötigte Komponente, also diejenige in Rollrichtung des betroffenen Rades, zu ermitteln.

Es ist besonders vorteilhaft, wenn die von Radumdrehungsgeschwindigkeiten unabhängig wirkenden Mittel zum Erfassen von Beschleunigungen mindestens einen Beschleunigungssensor, insbesondere mit kapazitivem Wirkprinzip, umfassen. Derartige Beschleunigungssensoren sind zuverlässig, genau und weisen kleine Einbaumaße auf.

Weiterhin ist es zweckmäßig, wenn mindestens zwei Räder jeweils mit einem Mittel zur Erfassung der Radumdrehungsgeschwindigkeit des jeweiligen Rades in Wirkverbindung stehen. Dadurch kann der Schlupf für jedes mit einem Drehzahlsensor in Wirkverbindung stehende Rad getrennt ermittelt werden. Gezielte Eingriffe zur Reduzierung des Anfahr- oder Bremsmomentes an einzelnen Rädern bieten optimale Regelung.

In einer zweckmäßigen Weiterbildung der Erfindung sind mindestens zwei unabhängig voneinander antreibbare Räder, die jeweils mit einem Mittel zur Erfassung der Radumdrehungsgeschwindigkeit des jeweiligen Rades in Wirkverbindung stehen, vorgesehen. Dadurch ist eine Wirkung des Systems sowohl bei Antriebs- als auch bei Bremsvorgängen gewährleistet. Zudem sind Antriebsmotoren häufig schon mit Drehzahlsensoren ausgestattet, so dass keine eigenständigen Sensoren benötigt werden.

Es ist zweckmäßig, wenn Mittel zur Erfassung des Lenkwinkels mindestens eines gelenkten Rades vorgesehen sind. Wenn die Richtung des gelenkten Rades bekannt ist, kann aus den vom Mittel zur Erfassung einer Beschleunigung des Flurförderzeugs erfassten Beschleunigungskomponenten die Beschleunigung in Richtung des Rades ermittelt und mit der vom Mittel zur Erfassung der Radumdrehungsgeschwindigkeit bestimmten Wert verglichen werden.

Es ist weiterhin zweckmäßig, wenn mindestens ein von Radumdrehungsgeschwindigkeiten unabhängig wirkendes Mittel zur Erfassung einer Beschleunigung des Flurförderzeugs in mindestens einer Richtung in einer elektronischen Steuerungsvorrichtung des Flurförderzeugs integriert ist. Dadurch wird ein Platz sparender Aufbau erreicht und zusätzlicher Verkabelungsaufwand vermieden.

Es ist ebenso zweckmäßig, wenn die Vorrichtung zur Regelung von Schlupf in einer elektronischen Steuerungsvorrichtung des Flurförderzeugs integriert ist. Dadurch wird ein kompakter, wenig aufwändiger Aufbau mit minimalem Verkabelungsaufwand erreicht.

Es ist weiterhin vorteilhaft, wenn Mittel zum Erkennen einer Neigung der Aufstandsfläche des Flurförderzeugs vorgesehen sind. Aufgrund der geneigten Aufstandsfläche ergibt sich eine Beschleunigungskomponente in Richtung des Gradienten der Aufstandsfläche, die zu einer Verfälschung der Beschleunigungsmessungen führen kann. Wird die Neigung der Aufstandsfläche erfasst, kann die Wirkung dieser Beschleunigungskomponente kompensiert werden.

Vorteilhafterweise ist mindestens ein von Radumdrehungsgeschwindigkeiten unabhängig wirkendes Mittel zur Erfassung einer Beschleunigung des Flurförderzeugs im Bereich eines Heckgewichts angeordnet. Bei Flurförderzeugen mit Hinterradlenkung treten im Bereich des Heckgewichts große und damit gut erfassbare Beschleunigungen in Fahrzeugquerrichtung auf. Da die Beschleunigungskomponente in Fahrtrichtung eines gelenkten Hinterrades aus der Längs- und der Querkomponente der Fahrzeugbeschleunigung berechnet wird, ist eine möglichst exakte Erfassung der Querkomponente der Beschleunigung insbesondere bei großen Lenkwinkein nötig. Dies wird durch die erfindungsgemäße Anordnung des Beschleunigungssensors ermöglicht. Die Signalqualität des Beschleunigungssensors ist bei Anbringung im Bereich des Heckgewichts besonders gut, da das Heckgewicht Erschütterungen dämpft, die das Messsignal verfälschen könnten. Elektronische Steuerungsvorrichtungen, in die der Beschleunigungssensor vorteilhafterweise integriert ist, sind zudem vorteilhafterweise im Bereich des Heckgewichts angeordnet, um die Wärmeabfuhr zu gewährleisten

Weitere Vorteile und Einzelheiten der Erfindung werden anhand der in den schematischen Figuren dargestellten Ausführungsbeispiele näher erläutert. Dabei zeigt
- Figur 1: ein Schema der Verkabelung eines erfindungsgemäßen Flurförderzeugs mit einem lenkbaren Antriebsrad,
- Figur 2: ein Schema der Verkabelung eines erfindungsgemäßen Flurförderzeugs mit zwei Antriebsmotoren an einer fest eingebauten Antriebsachse.

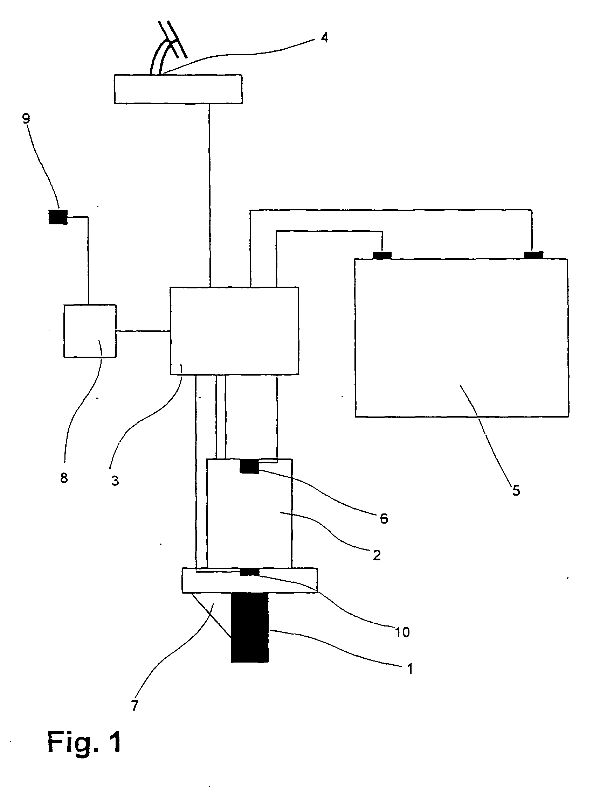

Figur 1 zeigt schematisch den Aufbau eines erfindungsgemäßen Flurförderzeugs mit einem lenkbaren Antriebsrad 1. Derartige Flurförderzeuge werden beispielsweise von der Firma STILL GmbH unter der Bezeichnung RX 50 hergestellt und vertrieben. Auch Hubwagen und Niederhubkommissionierer sowie Schubmaststapler und Kommissionierstapler verfügen zumeist über ein ähnliches Antriebsprinzip mit einem einzelnen gelenkten Antriebsrad 1. Verbindungen zwischen den Komponenten sind als einfache Striche dargestellt, wenn über diese Verbindungen vornehmlich Informationen, beispielsweise über ein Daten-Bus-System, ausgetauscht werden. Doppelte Striche charakterisieren Verbindungen, die hauptsächlich der Leistungsübertragung dienen.

Das lenkbare Antriebsrad 1 wird durch einen elektrischen Antriebsmotor 2 angetrieben. Der elektrische Antriebsmotor 2 wird von der elektrischen Steuerungsvorrichtung 3 angesteuert, die wiederum über Bedienelemente 4 die Vorgaben für Fahrgeschwindigkeit und -richtung vom Fahrer des Flurförderzeugs erhält. Die elektrische Energie wird von einer Batterie 5 bereitgestellt. Im elektrischen Antriebsmotor 2 integriert ist ein Drehzahlsensor 6, von dem die Drehzahl des elektrischen Antriebsmotors 2 ermittelt und an die elektrische Steuerungsvorrichtung 3 übertragen wird. Da der Umfang des Rades 1 ebenso wie die Übersetzung eines Getriebes 7 zwischen dem elektrischen Antriebsmotor 2 und dem Rad 1, bekannt ist, kann aus der Motordrehzahl die Umfangsgeschwindigkeit des Rades 1 und damit die Fahrgeschwindigkeit und die Beschleunigung des Flurförderzeugs berechnet und an eine Vorrichtung zur Regelung von Schlupf 8 übermittelt werden.

Ein zweiachsiger kapazitiver Beschleunigungssensor 9 ist mit der Vorrichtung zur Regelung von Schlupf 8 verbunden. Der Beschleunigungssensor 9 erfasst die Beschleunigung des Flurförderzeugs in der Fahrzeuglängsachse und in der Fahrzeugquerachse, indem elektrische Kapazitätsänderungen bei Bewegungen eines elastisch aufgehängten Körpers gemessen werden. Diese Daten werden in der Vorrichtung zur Regelung von Schlupf 8 erfasst und die Beschleunigungskomponente in Fahrtrichtung des Antriebsrades 1 berechnet. Die Fahrtrichtung des Antriebsrades wird durch den Lenkwinkel vorgegeben, der über einen Sensor 10 erfasst und an die elektronische Steuerung 3 sowie die Vorrichtung zur Regelung von Schlupf 8 übermittelt wird. Aus der so bestimmten Beschleunigungskomponente wird durch Aufintegration die Geschwindigkeit in Richtung des Antriebsrades 1 ermittelt und mit der mittels des Drehzahlsensors 6 ermittelten Geschwindigkeit des Antriebsrades 1 verglichen. Bei Überschreiten eines festgelegten Grenzwertes für die Differenz dieser Werte, der dem zulässigen Maß für den Schlupf entspricht, gibt die Vorrichtung zur Regelung von Schlupf 8 ein Signal an die elektrische Steuerungsvorrichtungseinrichtung 3 ab, wonach diese das Moment des elektrischen Antriebsmotors 2 reduziert. Dadurch gelangt das Rad 1 wieder in den Bereich der Haftreibung, der Schlupf des Rades 1 sinkt wieder auf ein zulässiges Maß. Dies wird wiederum in der Vorrichtung zur Regelung von Schlupf 8 registriert, die an die elektrische Steuerungsvorrichtung 3 ein Signal weitergibt, wonach diese das Moment des elektrischen Antriebsmotors 2 wieder auf den Vorgabewert erhöht.

Bei Bremsvorgängen, bei denen das Flurförderzeug durch den elektrischen Antriebsmotor 2 elektrisch abgebremst wird, beispielsweise unter Ausnutzung der Energierückgewinnung, wird analog vorgegangen, d.h. sobald der Schlupf ein zulässiges Maß überschreitet, wird die Bremswirkung reduziert, bis das Rad 1 wieder ausreichende Haftung aufbaut.

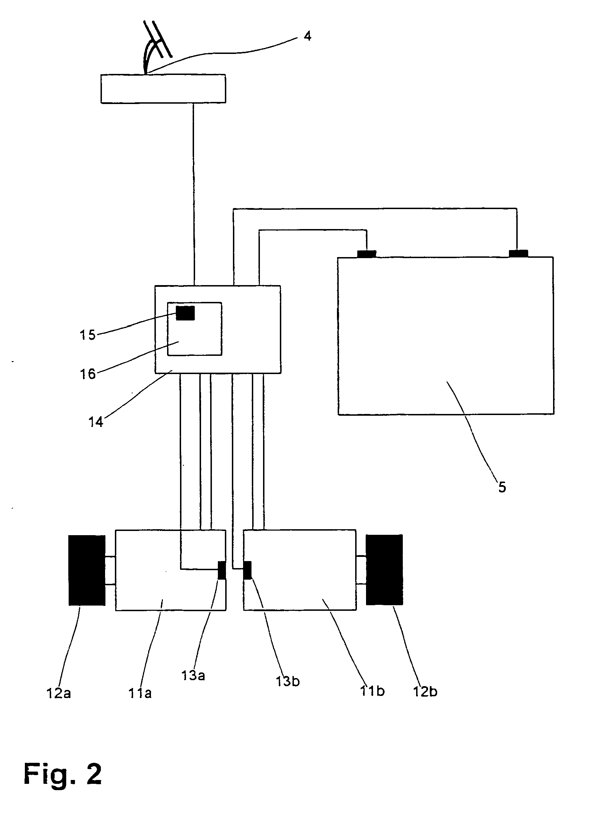

Figur 2 zeigt ein Schema der Verkabelung eines erfindungsgemäßen Flurförderzeugs mit zwei Antriebsmotoren 11 a, 11b. Gleiche Komponenten wie in Figur 1 tragen gleiche Bezeichnungen. Jeder der beiden Antriebsmotoren 11 a, 11 b treibt jeweils ein Antriebsrad 12a, 12b an, das im gezeigten Ausführungsbeispiel starr mit dem Flurförderzeug verbunden ist. Dies ist ein typischer Aufbau von elektrischen Gegengewichtsgabelstaplern höherer Leistungsklassen. Aber beispielsweise auch bei Schleppern und Wagen ist ein derartiges Antriebskonzept verbreitet. Jeder der beiden Antriebsmotoren 11a, 11b ist mit einem Drehzahlsensor 13a, 13b ausgestattet, deren Signale in der elektronischen Steuerungsvorrichtung 14 verarbeitet werden. Ein Beschleunigungssensor 15 ist ebenso wie die Vorrichtung zur Regelung von Schlupf 16 in der elektronischen Steuerungsvorrichtung 14 integriert.

Die Bestimmung des Schlupfes erfolgt für die einzelnen Antriebsräder 12a, 12b in der oben geschilderten Weise, d.h. die Vorrichtung zur Regelung von Schlupf 16 vergleicht die aus den Messwerten der Drehzahlsensoren 13a, 13b berechneten Geschwindigkeiten mit der Geschwindigkeit in Fahrtrichtung der Antriebsräder 12a, 12b, die aus den vom Beschleunigungssensor 15 erfassten Beschleunigungswerten berechnet wird. Da die Antriebsräder 12a, 12b nur eine Beschleunigung in Fahrzeuglängsrichtung aufbringen, genügt ein Vergleich der durch die Drehzahlsensoren 13a, 13b ermittelten Beschleunigung mit der vom Beschleunigungssensor 15 bestimmten Komponente in Fahrzeuglängsrichtung.

Gerät das Fahrzeug mit einem der beiden Antriebsräder 12a, 12b auf einen rutschigen Untergrund, beispielsweise einen gefliesten Hallenboden oder eine Ölspur, erhöht sich der Schlupf dieses Antriebsrades 12a und übersteigt ein festgelegtes Maß. Dies wird in der Vorrichtung zur Regelung von Schlupf 16 registriert und an die elektronische Steuerungsvorrichtung 14 ein Signal gegeben, so dass diese das Antriebsmoment des zu dem Antriebsrad 12a gehörenden Motors 11a reduziert. Das durchdrehende Rad 12a erlangt wieder Haftung. Stimmen die am Rad 12a gemessene und die mittels des Beschleunigungssensors 15 ermittelte Geschwindigkeit wieder überein, wird von der Vorrichtung zur Regelung von Schlupf 16 ein Signal an die elektronische Steuerungsvorrichtung 14 übermittelt, die daraufhin das Moment des Antriebsmotors 11a wieder erhöht, so dass das Rad 12a wieder Antriebsleistung überträgt. Da das andere Rad 12b während dieses Vorgangs über unveränderte Traktion verfügt und der Antriebsmotor 11 b unverändertes Antriebsmoment liefert, ist der Vortrieb des Fahrzeugs weiterhin gewährleistet.

Befindet sich das Fahrzeug auf einer geneigten Fahrbahn, beispielsweise einer Rampe, führt die Hangabtriebskraft in Richtung des Gradienten der Aufstandsfläche des Flurförderzeugs zu einem Messwert für die Beschleunigung des Fahrzeugs, der je nach Neigung der Aufstandsfläche zu groß oder zu klein sein kann. Bei Bergabfahrt an einer Rampe wird also durch den Beschleunigungssensor 15 eine kleinere Beschleunigung gemessen als sie das Flurförderzeug tatsächlich erfährt. Bei einer einfachen Schlupfregelung würde daher das Moment der Antriebsmotoren 11 a, 11 b reduziert, obwohl kein Schlupf an den Rädem 12a, 12b auftritt. Im vorliegenden Ausführungsbeispiel wird die von der elektronischen Steuerungsvorrichtung 14 erfasste Leistungszufuhr zu den Antriebsmotoren 11a, 11 b mit dem für die augenblickliche Drehzahl für Fahrten in der Ebene bekannten Leistungsbedarf in der elektronischen Steuerungsvorrichtung 14 verglichen und so festgestellt, ob sich das Flurförderzeug in einer Steigung befindet und wie groß diese ist. Diese Information wird an die Vorrichtung zur Regelung von Schlupf 16 übertragen, die daraufhin den Grenzwert für die Differenz zwischen mittels des Beschleunigungssensors 15 ermittelter und an den Drehzahlsensoren 13a, 13b gemessener Geschwindigkeit, bei welcher die Vorrichtung zur Regelung von Schlupf 16 ein Signal an die elektronische Steuerungsvorrichtung 14 zur Reduzierung des Antriebsmoments abgibt, erhöht. Damit ist sichergestellt, dass nur bei Vorhandensein von Schlupf die Antriebsleistung reduziert wird. Im gezeigten Ausführungsbeispiel wirkt damit die elektronische Steuerung 14 als Mittel zum Erkennen der Neigung der Aufstandsfläche.

Als mögliches Mittel zum Erkennen der Neigung ist auch die Verwendung eines dreiachsigen Beschleunigungssensors denkbar, der es ermöglicht, zu erkennen, ob sich das Flurförderzeug bergauf bzw. bergab bewegt. Beim Anfahren aus dem Stillstand ist es auch möglich, aufgrund der im Stillstand gemessenen Beschleunigung die neigungsbedingte Komponente herauszurechnen.

In den dargestellten Ausführungsbeispielen wird durch Aufintegration der von den Beschleunigungssensoren 9, 15 ermittelten Werte eine Geschwindigkeit bestimmt, die mit den von den Raddrehzahlsensoren 6, 13a, 13b ermittelten Geschwindigkeiten verglichen wird. Dadurch werden Schwankungen in den gemessenen Werten zu einem gewissen Teil ausgeglichen. Praktisch gleichwertig sind Verfahren, bei denen aus der zeitlichen Veränderung der Raddrehzahl eine Beschleunigung ermittelt wird, die mit der vom Beschleunigungssensor ermittelten verglichen wird. Hierbei kann durch eine Mittelung der Werte über einen hinreichend langen Zeitraum ebenfalls der Einfluss der Schwankungen reduziert werden. Selbstverständlich ist auch die Verarbeitung anderer Größen, die auf eindeutige Weise mit Geschwindigkeit und/oder Beschleunigung des Flurförderzeugs oder des zu überwachenden Rades verknüpft sind, als Vergleichsgrößen in einer Vorrichtung zur Regelung von Schlupf denkbar. Die Erfassung und Weiterverarbeitung der Messgrößen kann dabei je nach Erfordernissen und Möglichkeiten vollständig oder teilweise in der Vorrichtung zur Regelung von Schlupf wie auch in einer elektronischen Steuerungsvorrichtung oder in eigens dafür vorgesehenen Komponenten erfolgen.

Weiterhin sind Ausführungen der Erfindung denkbar, bei denen anstelle eines elektrischen Fahrantriebs andere Antriebsquellen nach dem Stand der Technik, wie beispielsweise hydraulische oder mechanische Antriebe, verwendet werden, die selbstverständlich ebenso Bremsfunktionen übernehmen können. Auch die Anwendung bei einer Antriebsanordnung, bei der ein Antriebsmotor mehrere Räder antreibt, beispielsweise über ein mechanisches Differential, ist denkbar. Ebenso kann als zusätzliche oder alleinige Bremsvorrichtung eine mechanische Bremse, beispielsweise eine Trommel- oder Scheibenbremse vorgesehen sein, die von der Vorrichtung zur Regelung von Schlupf angesteuert wird.

Anstelle eines kapazitiven Beschleunigungssensors können auch andere Formen von Beschleunigungssensoren, beispielsweise piezoelektrische, piezoresistive oder dem Prinzip der thermischen Blase folgende Sensoren verwendet werden. Es sind weiterhin auch andere Mittel zur Erfassung der Beschleunigung denkbar, beispielsweise solche zur Positionsbestimmung des Flurförderzeugs, bei denen aus der Veränderung der Position die Geschwindigkeit und die Beschleunigung des Flurförderzeugs berechnet werden kann.

## Patentansprüche

1. Flurförderzeug mit mindestens einem Mittel zur Erfassung der Radumdrehungsgeschwindigkeit (6) eines angetriebenen und/oder gebremsten Rades (1) und mindestens einer Vorrichtung zur Regelung von Schlupf (8), insbesondere bei Beschleunigungs- und/oder Bremsvorgängen, an mindestens einem Rad (1) des Flurförderzeugs, **dadurch gekennzeichnet, dass** von Radumdrehungsgeschwindigkeiten unabhängig wirkende Mittel (9) zur Erfassung einer Beschleunigung des Flurförderzeugs in mindestens einer Richtung vorgesehen sind, die mit der Vorrichtung zur Regelung von Schlupf (8) in Wirkverbindung stehen.

2. Flurförderzeug nach Anspruch 1, **dadurch gekennzeichnet, dass** von Radumdrehungsgeschwindigkeiten unabhängig wirkende Mittel (9) zum Erfassen von Beschleunigungen in mindestens zwei Richtungen, vorzugweise in Richtung der Fahrzeuglängsachse und der Fahrzeugquerachse, vorgesehen sind.

3. Flurförderzeug nach Anspruch 1 oder 2, **dadurch gekennzeichnet, dass** die von Radumdrehungsgeschwindigkeiten unabhängig wirkenden Mittel (9) zum Erfassen von Beschleunigungen mindestens einen Beschleunigungssensor (9), insbesondere mit kapazitivem Wirkprinzip, umfassen.

4. Flurförderzeug nach einem der Ansprüche 1 bis 3, **dadurch gekennzeichnet, dass** mindestens zwei Räder (12a, 12b) jeweils mit einem Mittel (13a, 13b) zur Erfassung der Radumdrehungsgeschwindigkeit des jeweiligen Rades in Wirkverbindung stehen.

5. Flurförderzeug nach einem der Ansprüche 1 bis 4, **dadurch gekennzeichnet, dass** mindestens zwei unabhängig voneinander antreibbare Räder (12a, 12b), die jeweils mit einem Mittel (13a, 13b) zur Erfassung der Radumdrehungsgeschwindigkeit des jeweiligen Rades (12a, 12b) in Wirkverbindung stehen, vorgesehen sind.

6. Flurförderzeug nach einem der Ansprüche 1 bis 5, **dadurch gekennzeichnet, dass** Mittel (10) zur Erfassung des Lenkwinkels mindestens eines gelenkten Rades (1) vorgesehen sind.

7. Flurförderzeug nach einem der Ansprüche 1 bis 6, **dadurch gekennzeichnet, dass** mindestens ein von Radumdrehungsgeschwindigkeiten unabhängig wirkendes Mittel (15) zur Erfassung einer Beschleunigung des Flurförderzeugs in mindestens einer Richtung in einer elektronischen Steuerungsvorrichtung (14) des Flurförderzeugs integriert ist.

8. Flurförderzeug nach einem der Ansprüche 1 bis 7, **dadurch gekennzeichnet, dass** die Vorrichtung zur Regelung von Schlupf (16) in einer elektronischen Steuerungsvorrichtung (14) des Flurförderzeugs integriert ist.

9. Flurförderzeug nach einem der Ansprüche 1 bis 8, **dadurch gekennzeichnet, dass** Mittel (14) zum Erkennen einer Neigung der Aufstandsfläche des Flurförderzeugs vorgesehen sind.

10. Flurförderzeug nach einem der Ansprüche 1 bis 9, **dadurch gekennzeichnet, dass** mindestens ein von Radumdrehungsgeschwindigkeiten unabhängig wirkendes Mittel (9) zur Erfassung einer Beschleunigung des Flurförderzeugs im Bereich eines Heckgewichts angeordnet ist.

## Claims

1. Industrial truck with at least one means for detecting the wheel revolution speed (6) of a driven and/or braked wheel (1) and at least one apparatus for regulating skid (8), in particular during acceleration and/or braking operations, on at least one wheel (1) of the industrial truck, **characterized in that** means (9), which act independently of wheel revolution speeds, for detecting an acceleration of the industrial truck in at least one direction are provided and are operatively connected to the apparatus for regulating skid (8).

2. Industrial truck according to Claim 1, **characterized in that** means (9), which act independently of wheel revolution speeds, for detecting accelerations in at least two directions, preferably in the direction of the vehicle longitudinal axis and of the vehicle transverse axis, are provided.

3. Industrial truck according to Claim 1 or 2, **characterized in that** the means (9), which act independently of wheel revolution speeds, for detecting accelerations comprise at least one acceleration sensor (9), in particular with a capacitive functional principle.

4. Industrial truck according to one of Claims 1 to 3, **characterized in that** at least two wheels (12a, 12b) are each operatively connected to a means (13a, 13b) for detecting the wheel revolution speed of the respective wheel.

5. Industrial truck according to one of Claims 1 to 4, **characterized in that** at least two wheels (12a, 12b), which can be driven independently of one another and which are each operatively connected to a means (13a, 13b) for detecting the wheel revolution speed of the respective wheel (12a, 12b), are provided.

6. Industrial truck according to one of Claims 1 to 5, **characterized in that** means (10) for detecting the steering angle of at least one steered wheel (1) are provided.

7. Industrial truck according to one of Claims 1 to 6, **characterized in that** at least one means (15), which acts independently of wheel revolution speeds, for detecting an acceleration of the industrial truck in at least one direction is integrated in an electronic control apparatus (14) of the industrial truck.

8. Industrial truck according to one of Claims 1 to 7, **characterized in that** the apparatus for regulating skid (16) is integrated in an electronic control apparatus (14) of the industrial truck.

9. Industrial truck according to one of Claims 1 to 8, **characterized in that** means (14) for identifying an incline of the tyre contact area of the industrial truck are provided.

10. Industrial truck according to one of Claims 1 to 9, **characterized in that** at least one means (9), which acts independently of wheel revolution speeds, for detecting an acceleration of the industrial truck is arranged in the region of a rear weight.

## Revendications

1. Chariot de manutention avec au moins un moyen pour détecter la vitesse de rotation de roue (6) d'une roue entraînée et/ou freinée (1) et au moins un dispositif de contrôle anti-patinage (8), en particulier lors de phases d'accélération et/ou de freinage, sur au moins une roue (1) du chariot de manutention, **caractérisé en ce qu'**il est prévu des moyens (9) agissant indépendamment de vitesses de rotation de roue pour détecter une accélération du chariot de manutention dans au moins une direction, qui sont en liaison active avec le dispositif de contrôle anti-patinage (8).

2. Chariot de manutention selon la revendication 1, **caractérisé en ce qu'**il est prévu des moyens (9) agissant indépendamment de vitesses de rotation de roue pour détecter des accélérations dans au moins deux directions, de préférence dans la direction de l'axe longitudinal du véhicule et de l'axe transversal du véhicule.

3. Chariot de manutention selon la revendication 1 ou 2, **caractérisé en ce que** les moyens (9) agissant indépendamment de vitesses de rotation de roue pour détecter des accélérations comprennent au moins un capteur d'accélération (9), en particulier agissant selon le principe de capacité.

4. Chariot de manutention selon l'une quelconque des revendications 1 à 3, **caractérisé en ce qu'**au moins deux roues (12a, 12b) sont en liaison active respectivement avec un moyen (13a, 13b) pour détecter la vitesse de rotation de roue de la roue respective.

5. Chariot de manutention selon l'une quelconque des revendications 1 à 4, **caractérisé en ce qu'**il est prévu au moins deux roues (12a, 12b) pouvant être entraînées indépendamment l'une de l'autre, qui sont en liaison active respectivement avec un moyen (13a, 13b) pour détecter la vitesse de rotation de roue de la roue respective (12a, 12b).

6. Chariot de manutention selon l'une quelconque des revendications 1 à 5, **caractérisé en ce qu'**il est prévu des moyens (10) pour détecter l'angle de braquage d'au moins une roue articulée (1).

7. Chariot de manutention selon l'une quelconque des revendications 1 à 6, **caractérisé en ce qu'**au moins un moyen (15) agissant indépendamment de vitesses de rotation de roue pour détecter une accélération du chariot de manutention dans au moins une direction est intégré dans un dispositif de commande électronique (14) du chariot de manutention.

8. Chariot de manutention selon l'une quelconque des revendications 1 à 7, **caractérisé en ce que** le dispositif de contrôle anti-patinage (16) est intégré dans un dispositif de commande électronique (14) du chariot de manutention.

9. Chariot de manutention selon l'une quelconque des revendications 1 à 8, **caractérisé en ce qu'**il est prévu des moyens (14) pour reconnaître une inclinaison de la surface d'appui du chariot de manutention.

10. Chariot de manutention selon l'une quelconque des revendications 1 à 9, **caractérisé en ce qu'**au moins un moyen (9) agissant indépendamment de vitesses de rotation de roue pour détecter une accélération du chariot de manutention est disposé dans la région d'un contrepoids arrière.
